(19) Europäisches Patentamt / European Patent Office / Office européen des brevets

(11) **EP 4 253 435 A1**

(12) **EUROPEAN PATENT APPLICATION**
published in accordance with Art. 153(4) EPC

(43) Date of publication:
**04.10.2023 Bulletin 2023/40**

(21) Application number: **21897834.4**

(22) Date of filing: **17.11.2021**

(51) International Patent Classification (IPC):
*C08F 220/44* (2006.01)   *H01M 4/13* (2010.01)
*H01M 4/139* (2010.01)   *H01M 4/62* (2006.01)

(52) Cooperative Patent Classification (CPC):
**C08F 220/44; H01M 4/13; H01M 4/139; H01M 4/62;**
Y02E 60/10

(86) International application number:
**PCT/JP2021/042328**

(87) International publication number:
**WO 2022/113860 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.11.2020 JP 2020199119**

(71) Applicant: **Zeon Corporation**
**Tokyo 100-8246 (JP)**

(72) Inventor: **FUJII Tsutomu**
**Tokyo 100-8246 (JP)**

(74) Representative: **Maiwald GmbH**
**Elisenhof**
**Elisenstraße 3**
**80335 München (DE)**

(54) **BINDER COMPOSITION FOR NONAQUEOUS LITHIUM ION SECONDARY BATTERY ELECTRODES, METHOD FOR PRODUCING SAME, BINDER SOLUTION FOR NONAQUEOUS LITHIUM ION SECONDARY BATTERY ELECTRODES, SLURRY COMPOSITION FOR NONAQUEOUS LITHIUM ION SECONDARY BATTERY ELECTRODES, ELECTRODE FOR NONAQUEOUS LITHIUM ION SECONDARY BATTERIES, AND NONAQUEOUS LITHIUM ION SECONDARY BATTERY**

(57) A binder composition for the electrode of a non-aqueous lithium ion secondary battery, which is unlikely to swell with respect to an electrolyte solution and can easily increase the electrode density of the electrode for a non-aqueous lithium ion secondary battery, includes a polymer, the polymer includes an acrylonitrile unit and an $\alpha,\beta$-ethylenically unsaturated nitrile monomer unit in which at least one or more types of hydrogen at the $\alpha$ position has been substituted, and the polymer has a crystallite size of 2.5 nm or more and 7.0 nm or less, which is determined from the peak within the range of $2\Theta = 14°$ to $18°$ in X-ray structure diffraction and the half width of this peak.

EP 4 253 435 A1

**Description**

TECHNICAL FIELD

The present disclosure relates to a binder composition for the electrode of a non-aqueous lithium ion secondary battery and a method of producing the same, a binder solution for the electrode of a non-aqueous lithium ion secondary battery, a slurry composition for the electrode of a non-aqueous lithium ion secondary battery, an electrode for a non-aqueous lithium ion secondary battery, and a non-aqueous lithium ion secondary battery.

BACKGROUND

Polyvinylidene fluoride (hereinafter referred to as "PVDF") is widely used for binder compositions used in the production of the electrode of a non-aqueous lithium ion secondary battery. PVDF has features such as high processability, high oxidation resistance, low degree of swelling in electrolyte solution, and high binding capacity, and the physical properties of PVDF contribute to the easiness of the electrode production and good input-output characteristics of the battery.

On the other hand, in the non-aqueous lithium ion secondary battery using PVDF, defluorination occurs as a side reaction during battery charging, and hydrogen fluoride generated by this reaction may lead to side reactions on the positive electrode and the negative electrode, thereby reducing the durability of the battery.

Therefore, alternative polymers to PVDF have been considered for many years. One example of the polymers is a polyacrylonitrile-based polymer (hereinafter referred to as "PAN-based polymer"), which is mainly composed of acrylonitrile as a constituent component of the polymer. The PAN-based polymer can exhibit high binding capacity by reducing the degree of swelling with respect to the electrolyte solution (hereinafter also referred to as "degree of swelling in electrolyte solution") as with PVDF by increasing the acrylonitrile ratio in the constituent components of the polymer, which can achieve good input-output characteristics of the battery.

However, because the PAN-based polymer has a rigid molecular structure, the production of the electrode for a non-aqueous lithium ion secondary battery using the PAN-based polymer causes a problem of reduction in flexibility, processability, and, in particular, rolling ability of the electrode to be obtained.

Therefore, numerous studies have been conducted to solve this problem. However, most of the studies, for example, as proposed in Patent Literature (PTL) 1, are to copolymerize a predetermined amount of (meth)acrylic acid ester with acrylonitrile to enhance the flexibility of the electrode, while minimizing the compensatory increase in degree of swelling in electrolyte solution. Moreover, PTL 2 studies achieving the suppression of the increase in degree of swelling in electrolyte solution and the flexibility of the electrode, by using a binder composition containing 70 to 95 parts by mass of a repeating unit derived from acrylonitrile and/or methacrylonitrile and 5 to 30 parts by mass of a repeating unit derived from (meth)acrylic acid ester having a carbon number of 4 to 100, per 100 parts by mass of total binder composition.

CITATION LIST

Patent Literature

PTL 1: JP2019526693A
PTL 2: JP4748439B

SUMMARY

(Technical Problem)

However, the binder composition using the above conventional PAN-based polymer has further room for improvement in achieving low degree of swelling in electrolyte solution and the rolling ability (ease of increasing electrode density) of the electrode for a non-aqueous lithium ion secondary battery formed using this binder composition. Therefore, this binder composition cannot respond to a request such as further energy densification and input-output densification required for the lithium ion secondary battery.

Thus, it could be helpful to provide a binder composition for the electrode of a non-aqueous lithium ion secondary battery, which can easily increase the electrode density of the electrode for a non-aqueous lithium ion secondary battery, while keeping the degree of swelling with respect to an electrolyte solution low, and a method of producing this binder composition.

In addition, it could be helpful to provide a binder solution for the electrode of a non-aqueous lithium ion secondary battery, which can easily increase the electrode density of the electrode for a non-aqueous lithium ion secondary battery, while keeping the degree of swelling with respect to an electrolyte solution low.

Furthermore, it could be helpful to provide a slurry composition for the electrode of a non-aqueous lithium ion secondary battery, which can easily increase the electrode density of the electrode for a non-aqueous lithium ion secondary battery, while keeping the degree of swelling with respect to an electrolyte solution low.

Moreover, it could be helpful to provide an electrode for a non-aqueous lithium ion secondary battery, which is excellent in energy density and input-output characteristics.

Furthermore, it could be helpful to provide a non-aqueous lithium ion secondary battery that achieves high energy density and excellent input-output characteristics.

(Solution to Problem)

The inventor conducted diligent study with the aim of solving the problems described above. Through this study, the inventor discovered that hydrogen bonding, which occurs between a hydrogen at the $\alpha$ position and a nitrile group in an acrylonitrile unit in the framework of the PAN-based polymer, and crystallinity consisting of the regularity of this hydrogen bonding greatly contribute to low degree of swelling in electrolyte solution and high binding capacity based on high cohesion derived from polyacrylonitrile in the PAN-based polymer. As a result of further study, the inventor discovered that the crystallinity of the PAN-based polymer can be appropriately controlled by partially introducing a repeating unit derived from an $\alpha,\beta$-ethylenically unsaturated nitrile monomer in which a hydrogen at the $\alpha$ position has been substituted, into the PAN-based polymer. Furthermore, the inventor discovered that the use of a binder composition containing this PAN-based polymer can easily increase the electrode density of the electrode for a non-aqueous lithium ion secondary battery, while keeping the degree of swelling with respect to an electrolyte solution low, and thereby completed this disclosure.

Specifically, this disclosure aims to advantageously solve the problems set forth above by disclosing a binder composition for the electrode of a non-aqueous lithium ion secondary battery (hereinafter also referred to simply as "binder composition") including a polymer, wherein the polymer includes an acrylonitrile unit; and an $\alpha,\beta$-ethylenically unsaturated nitrile monomer unit in which at least one or more types of hydrogen at the $\alpha$ position has been substituted, and the polymer has a crystallite size of 2.5 nm or more and 7.0 nm or less, which is determined from the peak within the range of 20 = 14° to 18° in X-ray structure diffraction and the half width of the peak. Thus, the use of the binder composition that includes a polymer including an acrylonitrile unit and an $\alpha,\beta$-ethylenically unsaturated nitrile monomer unit in which at least one or more types of hydrogen at the $\alpha$ position has been substituted, the polymer having a crystallite size under predetermined conditions in X-ray structure diffraction of 2.5 nm or more and 7.0 nm or less, can easily increase the electrode density of the electrode for a non-aqueous lithium ion secondary battery, while keeping the degree of swelling with respect to an electrolyte solution low.

The phrase "includes a monomer unit" as used herein means that "a polymer obtained with the monomer includes a repeating unit derived from the monomer". The ratio of the monomer unit in the polymer can be measured using nuclear magnetic resonance (NMR) method such as $^1$H-NMR, and pyrolysis GC/MS method.

In the present disclosure, the "crystallite size which is determined from the peak withing the range of 20 = 14° to 18° in X-ray structure diffraction and the half width of the peak" can be determined using Scherrer formula and can be specifically determined by a method described in EXAMPLE section herein.

In the presently disclosed binder composition for the electrode of a non-aqueous lithium ion secondary battery, the polymer preferably has a weight-average molecular weight (Mw) of 300,000 or more. If the polymer has a weight-average molecular weight of 300,000 or more, the peel strength of an electrode mixed material layer formed using a slurry composition for the electrode of a non-aqueous lithium ion secondary battery, which includes the presently disclosed binder composition, can be increased.

In the present disclosure, the "weight-average molecular weight" can be measured as a value in terms of standard polystyrene using gel permeation chromatography, and can be specifically measured by a method described in EXAMPLE section herein.

In the presently disclosed binder composition for the electrode of a non-aqueous lithium ion secondary battery, it is preferable that the $\alpha,\beta$-ethylenically unsaturated nitrile monomer unit in which a hydrogen at the $\alpha$ position has been substituted includes a methacrylonitrile unit and that the molar ratio of the acrylonitrile unit to the $\alpha,\beta$-ethylenically unsaturated nitrile monomer unit in which a hydrogen at the $\alpha$ position has been substituted, in the polymer, is 3.0 or more and 20.0 or less. If the polymer includes a methacrylonitrile unit and the molar ratio of the acrylonitrile unit to the $\alpha,\beta$-ethylenically unsaturated nitrile monomer unit in which a hydrogen at the $\alpha$ position has been substituted, in this polymer, is within the above range, the swelling of the binder composition with respect to an electrolyte solution can be kept at a low level, and the electrode density of the electrode for a non-aqueous lithium ion secondary battery can be easily increased. This can increase the energy density and enhance the input-output characteristics of the non-aqueous lithium ion secondary battery.

Furthermore, in the presently disclosed binder composition for the electrode of a non-aqueous lithium ion secondary battery, it is preferable that the polymer includes an acid group-containing monomer unit at a rate of 1 mass% or more and 6 mass% or less. If the polymer includes an acid group-containing monomer unit within the above range, the peel strength of an electrode mixed material layer obtained using a slurry composition for the electrode of a non-aqueous lithium ion secondary battery, which includes the presently disclosed binder composition, can be further increased.

This disclosure aims to advantageously solve the problems set forth above by disclosing a method of producing a binder composition for the electrode of a non-aqueous lithium ion secondary battery, which is a method of producing any one of the above binder compositions, and the method includes obtaining the polymer by polymerizing a composition that includes acrylonitrile and an $\alpha,\beta$-ethylenically unsaturated nitrile monomer in which at least one or more types of hydrogen at the $\alpha$ position has been substituted, in the presence of a solvent or a dispersion medium, and the binder composition has a concentration of the solid content including the polymer of 15 mass% or more. As such, if the method includes obtaining the polymer by polymerizing a composition that includes acrylonitrile and an $\alpha,\beta$-ethylenically unsaturated nitrile monomer in which at least one or more types of hydrogen at the $\alpha$ position has been substituted, in which the binder composition has a concentration of the solid content including the polymer of 15 mass% or more, the binder composition for the electrode of a non-aqueous lithium ion secondary battery can be produced with high productivity.

This disclosure also aims to advantageously solve the problems set forth above by disclosing a binder solution for the electrode of a non-aqueous lithium ion secondary battery (hereinafter also referred to simply as "binder solution"), which includes an organic solvent and any one of the above binder compositions for the electrode of a non-aqueous lithium ion secondary battery, in which the polymer is dissolved in the organic solvent. As such, the use of the binder solution including an organic solvent and any one of the above binder compositions can keep the degree of swelling in electrolyte solution of the binder composition low and easily increase the electrode density of the electrode for a non-aqueous lithium ion secondary battery. Therefore, the use of the presently disclosed binder solution can provide an electrode for a non-aqueous lithium ion secondary battery, which is excellent in energy density and input-output characteristics.

Furthermore, this disclosure aims to advantageously solve the problems set forth above by disclosing a slurry composition for the electrode of a non-aqueous lithium ion secondary battery (hereinafter also referred to simply as "slurry composition"), which includes at least an electrode active material and any one of the above binder compositions for the electrode of a non-aqueous lithium ion secondary battery. As such, the use of the slurry composition including at least an electrode active material and any one of the above binder compositions can keep the degree of swelling in electrolyte solution of the binder composition low and easily increase the electrode density of the electrode for a non-aqueous lithium ion secondary battery. Therefore, the use of the presently disclosed slurry composition can produce an electrode for a non-aqueous lithium ion secondary battery, which is excellent in energy density and input-output characteristics.

This disclosure also aims to advantageously solve the problems set forth above by disclosing an electrode for a non-aqueous lithium ion secondary battery (hereinafter also referred to simply as "electrode for a lithium ion secondary battery"), which includes an electrode mixed material layer formed using the above slurry composition. Such electrode for a lithium ion secondary battery, which includes an electrode mixed material layer, can keep the degree of swelling in electrolyte solution of the binder composition low and easily increase the electrode density, thus being excellent in energy density and input-output characteristics.

This disclosure aims to advantageously solve the problems set forth above by disclosing a non-aqueous lithium ion secondary battery (hereinafter also referred to simply as "lithium ion secondary battery"), which includes the above electrode for a lithium ion secondary battery. The presently disclosed lithium ion secondary battery has high energy density and is excellent in input-output characteristics.


(Advantageous Effect)


According to the present disclosure, it is possible to provide a binder composition for the electrode of a non-aqueous lithium ion secondary battery, which can easily increase the electrode density of the electrode for a non-aqueous lithium ion secondary battery, while keeping the degree of swelling with respect to an electrolyte solution low, and a method of producing this binder composition.

Moreover, according to the present disclosure, it is possible to provide a binder solution for the electrode of a non-aqueous lithium ion secondary battery, which can easily increase the electrode density of the electrode for a non-aqueous lithium ion secondary battery, while keeping the degree of swelling with respect to an electrolyte solution low.

Furthermore, according to the present disclosure, it is possible to provide a slurry composition for the electrode of a non-aqueous lithium ion secondary battery, which can easily increase the electrode density of the electrode for a non-aqueous lithium ion secondary battery, while keeping the degree of swelling with respect to an electrolyte solution low.

Moreover, according to the present disclosure, it is possible to provide an electrode for a non-aqueous lithium ion secondary battery, which is excellent in energy density and input-output characteristics.

Furthermore, according to the present disclosure, it is possible to provide a non-aqueous lithium ion secondary battery that achieves high energy density and excellent input-output characteristics.

DETAILED DESCRIPTION

The following provides a detailed description of embodiments of this disclosure.

The presently disclosed binder composition for the electrode of a non-aqueous lithium ion secondary battery can used for preparing the presently disclosed binder solution for the electrode of a non-aqueous lithium ion secondary battery and the presently disclosed slurry composition for the electrode of a non-aqueous lithium ion secondary battery. The presently disclosed binder composition for the electrode of a non-aqueous lithium ion secondary battery can be produced by, for example, the presently disclosed method of producing a binder composition for the electrode of a non-aqueous lithium ion secondary battery. Moreover, the presently disclosed slurry composition for the electrode of a non-aqueous lithium ion secondary battery can be used for producing an electrode for a non-aqueous lithium ion secondary battery. Furthermore, the presently disclosed electrode for a non-aqueous lithium ion secondary battery includes an electrode mixed material layer formed using the presently disclosed slurry composition for the electrode of a non-aqueous lithium ion secondary battery. The presently disclosed non-aqueous lithium ion secondary battery includes the presently disclosed electrode for a non-aqueous lithium ion secondary battery.

(Binder composition for electrode of non-aqueous lithium ion secondary battery)

The presently disclosed binder composition for the electrode of a non-aqueous lithium ion secondary battery is a binder composition that includes a polymer. The polymer includes an acrylonitrile unit, and an $\alpha,\beta$-ethylenically unsaturated nitrile monomer unit in which at least one or more types of hydrogen at the $\alpha$ position has been substituted, and the above polymer has a crystallite size of 2.5 nm or more and 7.0 nm or less, which is determined from the peak within the range of $2\theta = 14°$ to $18°$ in X-ray structure diffraction and the half width of this peak.

The presently disclosed binder composition may optionally include a solvent and other components in addition to the above polymer.

The presently disclosed binder composition includes a polymer, this polymer includes an acrylonitrile unit and an $\alpha,\beta$-ethylenically unsaturated nitrile monomer unit in which at least one or more types of hydrogen at the $\alpha$ position has been substituted, and this polymer has a crystallite size of 2.5 nm or more and 7.0 nm or less, which is determined from the peak within the rage of $2\theta = 14°$ to $18°$ in X-ray structure diffraction and the half width of this peak. Thus, the presently disclosed binder composition can easily increase the electrode density of the electrode for a non-aqueous lithium ion secondary battery, while keeping the degree of swelling with respect to an electrolyte solution low.

The presently disclosed binder composition is, in an electrode mixed material layer formed using a slurry composition that includes this binder composition, a component that holds components included in the electrode mixed material layer so as not to separate from the electrode mixed material layer and a component that can apply appropriate viscosity to the slurry composition. This can increase the coatability of the slurry composition to apply excellent peel strength to the electrode mixed material layer to be obtained. Furthermore, if the presently disclosed binder composition is used for the slurry composition, the time-course precipitation of the electrode active material or the like in the slurry composition can be delayed or suppressed, thus producing an electrode for a non-aqueous lithium ion secondary battery, which is excellent in productivity.

The polymer is required to include an acrylonitrile unit and an $\alpha,\beta$-ethylenically unsaturated nitrile monomer unit in which at least one or more types of hydrogen at the $\alpha$ position has been substituted, as described above. The polymer may optionally further include monomer units (hereinafter referred to as "other monomer units") other than the $\alpha,\beta$-ethylenically unsaturated nitrile monomer unit.

In the present disclosure, the $\alpha,\beta$-ethylenically unsaturated nitrile monomer unit in which a hydrogen at the $\alpha$ position has been substituted is a repeating unit derived from the $\alpha,\beta$-ethylenically unsaturated nitrile monomer in which a hydrogen at the $\alpha$ position has been substituted. The acrylonitrile unit is a repeating unit derived from acrylonitrile and is included in the $\alpha,\beta$-ethylenically unsaturated nitrile monomer unit.

[$\alpha,\beta$-ethylenically unsaturated nitrile monomer unit]

The polymer included in the presently disclosed binder composition can keep the degree of swelling with respect to an electrolyte solution low, by including an acrylonitrile unit and an $\alpha,\beta$-ethylenically unsaturated nitrile monomer unit in which at least one or more types of hydrogen at the $\alpha$ position has been substituted. Therefore, the electrode mixed material layer formed using a slurry composition that includes the presently disclosed binder composition can suppress an increase in internal resistance of the lithium ion secondary battery due to the breaking of the current collecting structure by a conductive additive in the electrode mixed material layer, which is caused by excessive expansion of the polymer in the presence of the electrolyte solution. This results in an increase in energy density and enhancement in input-output characteristics of the lithium ion secondary battery. Moreover, the polymer including the $\alpha,\beta$-ethylenically unsaturated nitrile monomer unit increases the strength of the polymer, which can increase the peel strength of the electrode mixed material layer.

Examples of the monomer that can form the $\alpha,\beta$-ethylenically unsaturated nitrile monomer unit in which a hydrogen at the $\alpha$ position has been substituted, included in the polymer, include $\alpha$-halogeno acrylonitrile such as $\alpha$-chloro acrylonitrile and $\alpha$-bromoacrylonitrile; and $\alpha$-alkyl acrylonitrile such as methacrylonitrile and $\alpha$-ethylacrylonitrile. Of these monomers, methacrylonitrile is preferable.

The content percentage of the acrylonitrile unit in the polymer is preferably 60 mass% or more, more preferably 65 mass% or more, and further preferably 70 mass% or more, and preferably 93 mass% or less, and more preferably 90 mass% or less. If the content percentage of the acrylonitrile unit in the polymer is equal to or more than the above lower limit, the degree of swelling with respect to the electrolyte solution of the binder composition can be kept lower. If the content percentage of the acrylonitrile unit in the polymer is equal to or less than the above upper limit, the rolling ability of the electrode mixed material layer can be more improved to easily increase the electrode density by pressing. Furthermore, the polymerization stability in producing the binder composition by emulsion polymerization can be increased.

The total content percentage of the acrylonitrile unit and the $\alpha,\beta$-ethylenically unsaturated nitrile monomer unit in which a hydrogen at the $\alpha$ position has been substituted, in the polymer, is preferably 85 mass% or more, and preferably 90 mass% or more, and preferably 97 mass% or less, and more preferably 95 mass% or less. If the total content percentage of the acrylonitrile unit and the $\alpha,\beta$- ethylenically unsaturated nitrile monomer unit in which a hydrogen at the $\alpha$ position has been substituted, in the polymer, is within the above range, the peel strength of the electrode mixed material layer can be increased. Moreover, the degree of swelling with respect to the electrolyte solution of the polymer can be kept further lower to sufficiently enhance the input-output characteristics of the lithium ion secondary battery.

Furthermore, the $\alpha,\beta$-ethylenically unsaturated nitrile monomer unit in which a hydrogen at the $\alpha$ position has been substituted, in the polymer, includes a methacrylonitrile unit, and the molar ratio of the acrylonitrile unit to the $\alpha,\beta$-ethylenically unsaturated nitrile monomer unit in which a hydrogen at the $\alpha$ position has been substituted, which are included in the polymer, is preferably 3.0 or more, and preferably 20.0 or less, and preferably 12.0 or less. If the molar ratio is equal to or more than the above lower limit, the degree of swelling with respect to the electrolyte solution of the polymer can be kept further lower. If the molar ratio is equal to or less than the above upper limit, the rolling ability of the electrode for a lithium ion secondary battery can be increased to further easily increase the electrode density.

[Other monomer units]

Other monomer units that can be included in the polymer include a repeating unit derived from a known polymer that can be copolymerized with the above $\alpha,\beta$-ethylenically unsaturated nitrile monomer. Specifically, examples of the other monomer units include, but are not particularly limited to, an acid group-containing monomer unit, a (meth)acrylic acid ester monomer unit, an amide group-containing monomer unit, and a hydroxyl group-containing monomer unit. One of the other monomer units may be used individually, or two or more of the other monomer units may be used in combination. Of these other monomer units, the polymer preferably includes an acid group-containing monomer unit and/or a (meth)acrylic acid ester monomer unit.

-Acid group-containing monomer unit-

The acid group-containing monomer unit is a repeating unit derived from an acid group-containing monomer. If the polymer includes the acid group-containing monomer unit, the peel strength of the electrode mixed material layer to be obtained can be made more excellent.

Examples of the acid group-containing monomer that can form the acid group-containing monomer unit include a carboxy group-containing monomer, a sulfo group-containing monomer, and a phosphate group-containing monomer.

Examples of the carboxy group-containing monomer include monocarboxylic acid and its derivative, dicarboxylic acid and its acid anhydride, and their derivatives.

Examples of monocarboxylic acid include acrylic acid, methacrylic acid, and crotonic acid.

Examples of the derivative of monocarboxylic acid include 2-ethyl acrylic acid, isocrotonic acid, $\alpha$-acetoxy acrylic acid, $\beta$-trans-aryloxy acrylic acid, and $\alpha$-chloro-$\beta$-E-methoxy acrylic acid.

Examples of dicarboxylic acid include maleic acid, fumaric acid, and itaconic acid.

Examples of the derivative of dicarboxylic acid include methyl maleic acid, dimethyl maleic acid, phenyl maleic acid, chloro-maleic acid, dichloromaleic acid, fluoromaleic acid, and maleic acid monoester such as nonyl maleate, decyl maleate, dodecyl maleate, octadecyl maleate, and fluoroalkyl maleate.

Examples of the acid anhydride of dicarboxylic acid include maleic anhydride, acrylic acid anhydride, methyl maleic anhydride, and dimethyl maleic anhydride.

Furthermore, an acid anhydride that produces a carboxyl group upon hydrolysis can be also used as a carboxy group-containing monomer.

Examples of the sulfo group-containing monomer include styrene sulfonic acid, vinyl sulfonic acid, methyl vinyl sulfonic acid, (meth)allyl sulfonic acid, and 3-allyloxy-2-hydroxypropane sulfonic acid.

In the present disclosure, "(meth)allyl" is used to indicate "allyl" and/or "methallyl".

Furthermore, examples of the phosphate group-containing monomer include 2-(meth)acryloyloxyethyl phosphate, methyl-2-(meth)acryloyloxyethyl phosphate, and ethyl-(meth) acryloyloxyethyl phosphate.

In the present disclosure, "(meth)acryloyl" is used to indicate "acryloyl" and/or "methacryloyl".

One of these acid group-containing monomers may be used individually, or two or more of these acid group-containing monomers may be used in combination. Of these acid group-containing monomers, from a viewpoint of further increasing the peel strength of the electrode mixed material layer to be obtained, the carboxy group-containing monomer is preferably used. Particularly, acrylic acid, methacrylic acid, itaconic acid, maleic acid, and fumaric acid are preferably used, and methacrylic acid is more preferably used.

The content percentage of the acid group-containing monomer unit in the polymer is preferably 1 mass% or more, and more preferably 2 mass% or more, and preferably 6 mass% or less, and more preferably 5 mass% or less. If the content percentage of the acid group-containing monomer unit in the polymer is within the above range, the peel strength of the electrode mixed material layer to be obtained can be made further excellent.

-(Meth)acrylic acid ester monomer unit-

The (meth)acrylic acid ester monomer unit is a repeating unit derived from a (meth)acrylic acid ester monomer. If the polymer includes the (meth)acrylic acid ester monomer unit, because the crystallite size of the polymer can be reduced, the rolling ability of the electrode mixed material layer to be obtained can be improved to effectively increase the density of the electrode mixed material layer by pressing.

In the present disclosure, "(meth)acryl" is used to indicate "acryl" or "methacryl".

Examples of the (meth)acrylic acid ester monomer that can form the (meth)acrylic acid ester monomer unit include acrylic acid alkyl ester such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl ester such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. One of these (meth)acrylic acid ester monomers may be used individually, or two or more of these (meth)acrylic acid ester monomers may be used in combination. Of these (meth)acrylic acid ester monomers, n-butyl acrylate is preferably used.

The content percentage of the (meth)acrylic acid ester monomer unit in the polymer is preferably less than 10 mass%, and more preferably less than 5 mass%. If the content percentage of the (meth)acrylic acid ester monomer unit in the polymer is less than 10 mass%, the degree of swelling with respect to the electrolyte solution can be reduced.

-Amide group-containing monomer unit-

The amide group-containing monomer unit is a repeating unit derived from an amide group-containing monomer. Examples of the amide group-containing monomer that can form the amide group-containing monomer unit include, methacrylamide, acrylamide, dimethylacrylamide, diethylacrylamide, diacetone acrylamide, hydroxyethyl acrylamide, and hydroxymethyl acrylamide. One of these amide group-containing monomers may be used individually, or two or more of these amide group-containing monomers may be used in combination. Of these amide group-containing monomers, from a viewpoint of enabling an increase in polymerization stability when producing the binder composition including the polymer using the emulsion polymerization, acrylamide and methacrylamide are preferably used.

The content percentage of the amide group-containing monomer unit in the polymer can be optionally adjusted to the extent that the desired effect of the present disclosure is achieved.

-Hydroxyl group-containing monomer unit-

The hydroxyl group-containing monomer unit is a repeating unit derived from a hydroxyl group-containing monomer. Examples of the hydroxyl group-containing monomer that can form the hydroxyl group-containing monomer unit include ethylenically unsaturated alcohols such as (meth)allyl alcohol, 3-butene-1-ol, and 5-hexene-1-ol; alkanol esters of ethylenically unsaturated carboxylic acid, such as 2-hydroxyethyl-acrylate, 2-hydroxypropyl-acrylate, 2-hydroxyethyl-methacrylate, 4-hydroxybutyl-acrylate, 2-hydroxypropyl-methacrylate, di-2-hydroxyethyl-maleate, di-4-hydroxybutyl maleate, and di-2-hydroxypropyl itaconate; esters of polyalkylene glycol and (meth)acrylic acid represented by the general formula: $CH_2=CR^a-COO-(C_qH_{2q}O)_p-H$ (where p represents an integer from 2 to 9, q represents an integer from 2 to 4, and $R^a$ represents a hydrogen atom or a methyl group); mono(meth)acrylic acid esters of dihydroxy ester of dicarboxylic acid, such as 2-hydroxyethyl-2'-(meth)acryloyl oxyphthalate and 2-hydroxyethyl-2'-(meth)acryloyl oxysuccinate; vinyl ethers such as 2-hydroxyethyl vinyl ether and 2-hydroxypropyl vinyl ether; mono(meth)allyl ethers of alkylene glycol, such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols, such as glycerin mono(meth)allyl ether, (meth)allyl-2-chloro-3-hydroxypropyl ether, and (meth)allyl-2-hydroxy-3-chloropropyl ether; mono(meth)allyl ether of polyhydric phenol such as eugenol and isoeugenol, and halogen substituted products thereof; (meth)allyl thioethers of alkylene glycol, such as (meth)allyl-2-hydroxyethyl thioether and (meth)allyl-2-hydroxypropyl thioether; and amides having a hydroxyl group, such as N-hydroxymethylacrylamide (N-methylolacrylamide), N-hydroxymethylmethacrylamide, N-hydroxyethylacrylamide, and N-hydroxyethylmethacrylamide.

[Weight-average molecular weight]

The weight-average molecular weight (Mw) of the above polymer is preferably 300,000 or more, more preferably 500,000 or more, and particularly preferably 700,000 or more, and preferably 2,000,000 or less, and more preferably 1,500,000 or less. If the weight-average molecular weight of the polymer is equal to or more than the above lower limit, the peel strength of the electrode mixed material layer to be obtained can be made further excellent. Furthermore, the time-course precipitation of the electrode active material or the like in the slurry composition can be delayed or suppressed, which can increase the time-course stability of the slurry. If the weight-average molecular weight of the polymer is equal to or less than the above upper limit, the reduction in solid content concentration when the viscosity of the slurry composition is within the desired range can be suppressed, which can suppress a reduction in productivity during coating and drying of the slurry. The weight-average molecular weight of the polymer can be adjusted by changing polymerization conditions such as the amount of a polymerization initiator, the amount of a chain transfer agent, and the polymerization temperature during the production of the polymer.

[Method of preparing polymer]

The method of preparing the above polymer is not particularly limited. For example, the polymer can be prepared by adding a polymerization initiator such as potassium persulfate to a monomer composition including the above monomer to cause polymerization reaction.

The content percentage of each monomer in the monomer composition used for preparing the polymer can be determined according to the content percentage of each monomer unit in the polymer.

Any polymerization reaction can be used, such as ionic polymerization, radical polymerization, or living radical polymerization. The mode of polymerization is not particularly limited, and any method can be used, such as solution polymerization, suspension polymerization, bulk polymerization, precipitation polymerization, or emulsion polymerization. However, from a viewpoint of the productivity of the polymer, emulsion polymerization is preferable.

[Crystallite size]

In the presently disclosed binder composition, the crystallite size determined from the peak within the rage of $2\theta = 14°$ to $18°$ in X-ray diffraction of the polymer and the half width of this peak (hereinafter also referred to simply as "crystallite size") is required to be 2.5 nm or more, and preferably 3.0 or more, and is required to be 7.0 nm or less, and preferably 6.8 nm or less. If the crystallite size of the polymer is within the above range, the electrode density of the electrode for a lithium ion secondary battery can be easily increased, while keeping the degree of swelling with respect to an electrolyte solution low. The crystallite size of the polymer can be controlled by adjusting the content percentage of the acrylonitrile unit in the polymer and the content percentage of the $\alpha,\beta$-ethylenically unsaturated nitrile monomer unit other than the acrylonitrile unit.

<Solvent>

Examples of the solvent that can be included in the presently disclosed binder composition can include, but are not particularly limited to, an organic solvent. Examples of the organic solvent include, but are not particularly limited to, alcohols such as methanol, ethanol, n-propanol, isopropanol, n-butanol, isobutanol, t-butanol, pentanol, hexanol, heptanol, octanol, nonanol, decanol, and amyl alcohol; ketones such as acetone, methyl ethyl ketone, and cyclohexane; esters such as ethyl acetate and butyl acetate; ethers such as diethyl ether, dioxane, and tetrahydrofuran; amide-based polar organic solvents such as N,N-dimethylformamide and N-methyl-2-pyrrolidone (NMP); and aromatic hydrocarbons such as toluene, xylene, chlorobenzene, o-dichlorobenzene, and para-dichlorobenzene. One of these organic solvents may be used individually, or two or more of these organic solvents may be used in combination.

<Other components>

Examples of other components that can be included in the presently disclosed binder composition include, but are not particularly limited to, components such as a reinforcing material, a leveling agent, a viscosity modifier, and an additive for electrolyte solution. As these components, well-known components, for example, components described in WO 2012/115096 A can be used. One of these components may be used individually, or two or more of these components may be used in combination.

[Preparation of binder composition]

The presently disclosed binder composition can be prepared by mixing the above polymer with any solvent and/or other components by a known method. Specifically, the binder composition can be prepared by mixing the above respective components using a mixer such as a ball mill, a sand mill, a bead mill, a pigment disperser, a grinding machine, an ultrasonic disperser, a homogenizer, a planetary mixer, and FILMIX.

When the binder composition is prepared using a dispersion liquid of the polymer, liquid content contained in the dispersion liquid and/or an aqueous solution may be used as the solvent of the binder composition. Furthermore, from a viewpoint of increasing the productivity of an electrode for a lithium ion secondary battery, which is produced using a slurry composition including the presently disclosed binder composition, the presently disclosed binder composition is preferably prepared in accordance with the presently disclosed method of producing a binder composition for the electrode of a non-aqueous lithium ion secondary battery, which is described below.

(Method of producing binder composition for electrode of non-aqueous lithium ion secondary battery)

The presently disclosed method of producing a binder composition includes obtaining the above polymer by polymerizing a composition that includes acrylonitrile and an $\alpha,\beta$-ethylenically unsaturated nitrile monomer in which at least one or more types of hydrogen at the $\alpha$ position has been substituted, in the presence of a solvent or a dispersion medium, and this binder composition has a concentration of the solid content including this polymer of 15 mass% or more. The concentration of the solid content including the polymer in the above binder composition is preferably 20 mass% or more, and more preferably 30 mass% or more. The presently disclosed method of producing a binder composition can produce a binder composition including more polymer in a single production, which can increase the productivity of the binder composition.

(Binder solution for electrode of non-aqueous lithium ion secondary battery)

The presently disclosed binder solution includes an organic solvent and the above binder composition for the electrode of a non-aqueous lithium ion secondary battery, and the polymer is dissolved in the organic solvent. The presently disclosed binder solution can optionally include other components.

<Organic solvent>

Examples of the organic solvent included in the presently disclosed binder solution include, but are not particularly limited to, the same organic solvents that can be blended into the above binder composition. One of these organic solvents may be used individually, or two or more of these organic solvents may be used in combination. Of these organic solvents, NMP is preferably used.

<Other components>

Examples of the other components that can be blended into the presently disclosed binder solution include, but are not particularly limited to, the same other components that can be blended into the above binder composition. One of these other components may be used individually, or two or more of these other components may be used in combination.

[Preparation of binder solution]

The presently disclosed binder solution can be prepared by mixing an organic solvent, the presently disclosed binder composition, and any other components by a known method. In this case, the mixing method is not particularly limited. The mixing can be performed using the same mixer used in preparation of the presently disclosed binder composition.

(Slurry composition for electrode of non-aqueous lithium ion secondary battery)

The presently disclosed slurry composition for the electrode of a lithium ion secondary battery includes at least an electrode active material and the above binder composition, and optionally, can further include a conductive additive, an organic solvent, and other components. Because the presently disclosed slurry composition includes the above binder composition, the density of the electrode mixed material layer formed using the presently disclosed slurry composition can be increased by pressing. Therefore, the use of the electrode for a non-aqueous lithium ion secondary battery, which includes such electrode mixed material layer, can achieve high energy density and excellent input-output characteristics of the lithium ion secondary battery.

<Electrode active material>

The electrode active material included in the presently disclosed slurry composition is a substance that accepts and donates electrons in the electrode of the lithium ion secondary battery. A substance that can occlude and release lithium is normally used as a positive electrode active material for a lithium ion secondary battery.

Specifically, examples of the positive electrode active material of the lithium ion secondary battery include, but are not particularly limited to, known positive electrode active materials such as lithium-containing cobalt oxide ($LiCoO_2$), lithium manganate ($LiMn_2O_4$), lithium-containing nickel oxide ($LiNiO_2$), lithium-containing composite oxide of Co-Ni-Mn ($Li(CoMnNi)O_2$), lithium-containing composite oxide of Ni-Mn-Al, lithium-containing composite oxide of Ni-Co-Al, olivine-type lithium iron phosphate ($LiFePO_4$), olivine-type manganese lithium phosphate ($LiMnPO_4$), $Li_2MnO_3$-$LiNiO_2$-based solid solution, lithium rich spinel compounds represented by $Li_{1+x}Mn_{2-x}O_4$ ($0 < X < 2$), Li $[Ni_{0.17}Li_{0.2}Co_{0.07}Mn_{0.56}]O_2$, and $LiNi_{0.5}Mn_{1.5}O_4$.

The amount and particle diameter of the positive electrode active material may be, but are not particularly limited to, the same as those of conventionally-used positive electrode active materials.

Examples of the negative electrode active material of the lithium ion secondary battery include carbon-based negative electrode active materials, metal-based negative electrode active materials, and negative electrode active materials formed by combining these materials.

The carbon-based negative electrode active material can be defined as an active material that contains carbon as its main framework and into which lithium can be inserted (also referred to as "doping"). Examples of the carbon-based negative electrode active material include carbonaceous materials and graphitic materials.

Examples of the carbonaceous materials include graphitizable carbon and non-graphitizable carbon, typified by glassy carbon, which has a structure similar to an amorphous structure.

The graphitizable carbon may be a carbon material made using tar pitch obtained from petroleum or coal as a raw material. Specific examples of the graphitizable carbon include coke, mesocarbon microbeads (MCMB), mesophase pitch-based carbon fiber, and pyrolytic vapor-grown carbon fiber.

Examples of the non-graphitizable carbon include pyrolyzed phenolic resin, polyacrylonitrile-based carbon fiber, quasi-isotropic carbon, pyrolyzed furfuryl alcohol resin (PFA), and hard carbon.

Furthermore, examples of the graphitic materials include natural graphite and artificial graphite.

Examples of the artificial graphite include an artificial graphite obtained by heat-treating carbon containing graphitizable carbon mainly at 2800°C or more, graphitized MCMB obtained by heat-treating MCMB at 2000°C or more, and graphitized mesophase pitch-based carbon fiber obtained by heat-treating mesophase pitch-based carbon fiber at 2000°C or more.

The metal-based negative electrode active material is an active material that contains metal, the structure of which usually contains an element that allows insertion of lithium, and that exhibits a theoretical electric capacity per unit mass of 500 mAh/g or more when lithium is inserted. Examples of the metal-based active material include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti); alloys of the simple substance of metal; and oxides, sulfides, nitrides, silicides, carbides, and phosphides of lithium metal, the simple substance of metal, and the alloys of the simple substance of metal. Of these metal-based negative electrode active materials, active materials containing silicon (silicon-based negative electrode active materials) are preferable. The use of a silicon-based negative electrode active material can increase the capacity of the lithium ion secondary battery.

Examples of the silicon-based negative electrode active material include silicon (Si), a silicon-containing alloy, SiO, $SiO_x$, and a composite material of conductive carbon and a Si-containing material obtained by coating or combining the Si-containing material with the conductive carbon.

<Binder composition>

The presently disclosed binder composition including the above polymer can be used as a binder composition included in the presently disclosed slurry composition.

<Conductive additive>

The conductive additive that can be included in the presently disclosed slurry composition ensures electrical contact amongst the electrode active material. Examples of the conductive additive include conductive carbon materials such as carbon black (for example, acetylene black, Ketjenblack® (Ketjenblack is a registered trademark in Japan, other countries, or both), and furnace black), graphite, carbon fiber, carbon flake, and carbon nanofiber (for example, carbon nanotubes and vapor-grown carbon fiber) and graphene; and fibers or foils of various metals. Of these conductive additives, acetylene black, carbon nanotubes, and graphene are preferable. One of these conductive additives may be used individually, or two or more of these conductive additives may be used in combination.

The amount of the conductive additive in the slurry composition depends on the form, bulk density, specific surface area of the conductive additive to be used. However, normally, the amount of the conductive additive in the slurry composition is preferably 0.1 parts by mass or more, and preferably 10 parts by mass or less, per 100 parts by mass of the electrode active material. If the slurry composition includes the conductive additive with an appropriate amount and in an appropriate dispersed state, a good current collecting structure is formed in the electrode mixed material layer produced using the slurry composition, which can enhance the input-output characteristics of the lithium ion secondary battery and suppress damping of the capacity during charge/discharge cycling.

<Organic solvent>

Examples of the organic solvent that can be blended into the presently disclosed slurry composition include, but are not particularly limited to, the same organic solvents included in the presently disclosed binder solution. One of these organic solvents may be used individually, or two or more of these organic solvents may be used in combination.

<Other components>

Examples of other components that can be blended into the presently disclosed slurry composition include, but are not particularly limited to, the same other components that can be blended into the above binder composition. One of these other components may be used individually, or two or more of these other components may be used in combination.

[Preparation of slurry composition]

The above slurry composition can be prepared by mixing the above respective components by a known method. Specifically, the slurry composition can be prepared by mixing the above respective components using the mixer described in the above "Preparation of binder composition" section. In this case, the presently disclosed slurry composition may be prepared by mixing the above binder solution including the presently disclosed binder composition, the electrode active material, and any other components.

[Properties of slurry composition]

The solid content concentration of the presently disclosed slurry composition depends on the true specific gravity and particle size distribution of the electrode active material to be used, as well as the formulation of the slurry composition, such as the type and amount of the conductive additive to be used. However, in the case of a positive electrode slurry composition in which the presently disclosed slurry composition uses NMC532 (lithium-containing composite oxide of Ni-Mn-Co) as an electrode active material, the solid content concentration of this slurry composition is preferably 60 mass% or more, and more preferably 65% or more, and preferably 80 mass% or less, and preferably 75 mass% or less.

(Electrode for lithium ion secondary battery)

The presently disclosed electrode for a lithium ion secondary battery includes an electrode mixed material layer formed using the presently disclosed slurry composition. More specifically, the presently disclosed electrode includes a current collector and an electrode mixed material layer formed on the current collector, and the electrode mixed material layer is formed using the presently disclosed slurry composition. That is, the electrode mixed material layer included in the presently disclosed electrode includes at least an electrode active material and a polymer, and optionally includes other components. The respective components included in the electrode mixed material layer are same as those included in the above slurry composition. The preferred ratio of those respective components is the same as the preferred ratio of the respective components in the slurry composition.

The presently disclosed electrode for a lithium ion secondary battery includes an electrode mixed material layer formed using the slurry composition including the presently disclosed binder composition, and the density of this electrode mixed material layer can be increased by pressing. Therefore, the presently disclosed electrode for a lithium ion secondary battery can have high electrode density.

[Method of producing electrode for lithium ion secondary battery]

The presently disclosed electrode for lithium ion secondary battery can be produced through, for example, a step of applying the above slurry composition onto a current collector (application step) and a step of drying the slurry composition applied onto the current collector to form an electrode mixed material layer on the current collector (drying step).

[Application step]

The slurry composition can be applied onto the current collector by a commonly known method without any specific limitations. Specific examples of application methods that can be used include doctor blading, dip coating, reverse roll coating, direct roll coating, gravure coating, extrusion coating, and brush coating. The slurry composition may be applied onto one surface or both surfaces of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, or platinum. One of these materials may be used individually, or two or more of these materials may be used in combination.

[Drying step]

The slurry composition on the current collector may be dried by a commonly known method without any specific limitations. Examples of drying methods that can be used include drying by warm, hot, or low-humidity air; drying in a vacuum; and drying by irradiation with infrared light, electron beams, or the like. Drying of the slurry composition on the current collector in this manner forms an electrode mixed material layer on the current collector and thereby provides an electrode for a lithium ion secondary battery, which includes the current collector and the electrode mixed material layer.

After the drying step, the electrode mixed material layer may be further subjected to a pressing process, such as mold pressing or roll pressing. The pressing process can improve close adherence between the electrode mixed material layer and the current collector.

(Lithium ion secondary battery)

The presently disclosed lithium ion secondary battery includes a positive electrode, a negative electrode, an electrolyte solution, and a separator, wherein the presently disclosed electrode for a lithium ion secondary battery is used as at least one of the positive electrode and the negative electrode. The presently disclosed lithium ion secondary battery has high energy density and excellent battery characteristics such as input-output characteristics as a result of including the presently disclosed electrode for a lithium ion secondary battery.

<Electrode>

Examples of electrodes other than the above electrode for a lithium ion secondary battery, which can be used for the presently disclosed lithium ion secondary battery, can include, but are not particularly limited to, a known electrode used in the production of the lithium ion secondary battery. Specifically, electrodes obtained by forming an electrode mixed material layer on the current collector using a known production method can be used as an electrode other than the above electrode for a lithium ion secondary battery.

<Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of the lithium salt include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable, and $LiPF_6$ is particularly preferable as these lithium salts readily dissolve in solvents and exhibit a high degree of dissociation. One of these electrolytes may be used individually, or two or more of these electrolytes may be used in combination in a freely selected ratio. In general, lithium ion conductivity tends to increase when a supporting electrolyte having a high degree of dissociation is used. Therefore, lithium ion conductivity can be adjusted through the type of the supporting electrolyte.

The organic solvent used in the electrolyte solution is not specifically limited so long as the supporting electrolyte can dissolve therein. Examples of suitable organic solvents include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixed liquid of such solvents may be used. Of these solvents, carbonates are preferred for their high dielectric constant and broad stable potential region.

The concentration of the electrolyte in the electrolyte solution can be adjusted as appropriate and is, for example, preferably 0.5 mass% to 15 mass%, more preferably 2 mass% to 13 mass%, and even more preferably 5 mass% to 10 mass%. Known additives such as fluoroethylene carbonate and ethyl methyl sulfone can be added to the electrolyte solution.

<Separator>

Examples of separators that can be used include, but are not particularly limited to, those described in JP 2012-204303 A. Of these separators, a fine porous membrane made of polyolefinic (polyethylene, polypropylene, polybutene, or polyvinyl chloride) resin is preferred because such a membrane can reduce the total thickness of the separator, which increases the ratio of electrode active material in the lithium ion secondary battery, and consequently increases the capacity per volume.

<Method of producing lithium ion secondary battery>

The presently disclosed lithium ion secondary battery may be produced, for example, by stacking the positive electrode and the negative electrode with the separator in-between, performing rolling, folding, or the like of the resultant laminate in accordance with the battery shape as necessary to place the laminate in a battery container, injecting the electrolyte solution into the battery container, and sealing the battery container. In order to prevent pressure increase inside the lithium ion secondary battery and occurrence of overcharging or overdischarging, an overcurrent preventing device such as a fuse or a PTC device; an expanded metal; or a lead plate may be provided as necessary. The shape of the lithium ion secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted in the polymer by a monomer unit formed through polymerization of a given monomer is normally, unless otherwise specified, the same as the ratio (charging ratio) of the unit of the given monomer among all monomers used in polymerization for forming the polymer.

(Example 1)

<Preparation of binder composition including polymer>

A reactor A on which a mechanical stirrer and a capacitor are mounted was charged with 75 parts of deionized water as a solvent and 1.25 parts of a 16% aqueous solution of an emulsifier A (NEOPELEX G-15 produced by Kao Corporation) as an emulsifier, as presented in Table 1, under a nitrogen atmosphere. The reactor A was then heated to 60°C under stirring, and 7.5 parts of a 4% aqueous solution of potassium persulfate (KPS) as a polymerization initiator was added to the reactor A. Next, a reactor B, which is different from the reactor A, was charged with 90 parts of deionized water as a solvent, 6.3 parts of a 16% aqueous solution of the emulsifier A as an emulsifier, 87 parts of acrylonitrile (AN) and 5.5 parts of methacrylonitrile (MAN) as $\alpha,\beta$-ethylenically unsaturated nitrile monomers, 3 parts of methacrylic acid (MAA) as an acid group-containing monomer, 6.3 parts of a 40% aqueous solution of acrylamide (Aam) as an amide group-containing monomer, 2 parts of n-butyl acrylate (BA) as a (meth)acrylic acid ester monomer, and 0.05 parts of tert-dodecyl mercaptan (TDM) as a chain transfer agent, as presented in Table 1, under a nitrogen atmosphere, and they are stirred and emulsified to prepare a monomer mixed solution. The monomer mixed solution in a stirred and emulsified state was then dropped into the reactor A. At this time, the dropping was performed at a constant rate with maintaining a constant internal temperature (polymerization temperature: 60°C), for five hours. After the end of dropping, the state where the internal temperature is constant was maintained for three hours to obtained a water dispersion (binder composition) of an acrylonitrile-methacrylonitrile-methacrylic acid-acrylamide-n-butyl acrylate copolymer with a polymerization conversion rate of 98%.

<Preparation of polymer powder>

About 2 g of the binder composition produced above was added to an aluminum plate, and this aluminum plate was left to stand on a hot plate, which was heated to 80°C, for three hours to remove water from the above binder composition. The obtained polymer was then moved to an agate mortar, ground with a pestle, and recovered to obtain polymer powder.

<Weight-average molecular weight of polymer>

The weight-average molecular weight of the polymer included in the binder composition was measured by gel permeation chromatography (GPC). Specifically, first, after weighing 0.004 g of the polymer powder, about 4 mL of eluent was added to the polymer powder so that the solid content concentration became about 1,000 ppm, and the polymer powder was dissolved in the eluent by shaking them at room temperature. After visually checking the dissolution of the polymer powder, filtration was applied using a filter of 0.45 $\mu$m to prepare a measurement sample. Then, after creating a calibration curve with a standard substance, the measurement sample was measured to calculate a weight-average molecular weight as a value in terms of the standard substance. The measurement conditions are described below.

[Measurement conditions]

Device: product name: HLC-8320GPC, produced by Tosoh Corporation Column: produced by Tosoh Corporation, product name: TSKgel $\alpha$-M $\times$ 2 ($\varphi$7.8 mm I.D. $\times$ 30 cm $\times$ 2)
Eluent: N,N-dimethylformamide (containing lithium bromide with a concentration of 10 mM)
Flow rate: 1 mL/min
Injected amount: 10 $\mu$L
Column temperature: 40°C
Detector: differential refractive index detector (RI)
Standard substance: standard polystyrene kit (produced by Tosoh Corporation, product name: PSt Quick Kit-H)

<Crystallite size of polymer>

The crystallite size of the polymer was measured under the following conditions by filling a sample plate of an X-ray structure diffractometer with the above polymer powder. Specifically, background subtraction was performed on an X-ray structure diffraction profile obtained by X-ray structure diffraction. Peak separation was then performed to isolate the peak in the range of 20 = 14° to 18° from the X-ray structure diffraction profile. The crystallite size of the polymer was determined by turning the half width (β) (radian) of this peak, as well as the wavelength of X-ray (λ), Bragg angle (θ) (radian), and Scherrer constant (k) into the Scherrer formula. In this case, Scherrer constant (k) of 0.94 was used. The Scherrer formula is presented below. Table 2 presents the results.

$$\text{Crystallite size of polymer} = k\lambda/\beta\cos\theta$$

[Measurement conditions]

X-ray structure diffractometer: automated multipurpose X-ray diffractometer SmartLab (produced by Rigaku Corporation)
Measurement method: concentration technique
Scanning speed: 20°/min
Tube voltage: 45 kV
Tube current: 200 mA

<Preparation of binder solution for electrode of non-aqueous lithium ion secondary battery>

After a moderate amount of N-methyl-2-pyrrolidone (NMP) as an organic solvent was added to the binder composition obtained above to prepare the mixture, vacuum distillation was performed at 80°C, and water and excessive NMP were removed from this mixture to obtained a binder solution. The degree of swelling in electrolyte solution of the binder composition was measured as described below using the obtained binder solution. Table 2 presents the results.

[Degree of swelling in electrolyte solution]

A predetermined amount of the binder solution prepared above was injected into a polytetrafluoroethylene petri dish and then dried in an environment of a temperature of 80°C to 120°C for three to eight hours to obtain a cast film made of the polymer with a thickness of about 400 μm. This cast film was cut to produce a film piece with a mass of 200 mg to 400 mg. The mass of the obtained film piece was recorded as W0. After this film piece was put into a glass vessel equipped with an airtight stopper, an electrolyte solution (composition: $LiPF_6$ solution with a concentration of 1.0 M (mixed solvent of ethylene carbonate (EC) : ethyl methyl carbonate (EMC) = 3:7 (weight ratio) as solvent; 2 volume% (solvent ratio) of vinylene carbonate added as additive) was added into the above glass vessel to immerse the film piece in the electrolyte solution. The glass vessel containing the film piece and the electrolyte solution was then left to stand in an environment of a temperature of 60°C for three days with an airtight state to promote the swelling of the film piece. After a lapse of three days, the film piece was picked up from the glass vessel at room temperature, the electrolyte solution that oozes out from the surface of the film piece was wiped off, and the mass was then measured. The mass of the film piece after the swelling was recorded as W1 to calculate the degree of swelling in electrolyte solution using the following calculating formula.

$$\text{Degree of swelling in electrolyte solution (mass\%)} = \{(W1 - W0) / W0\} \times 100$$

If the degree of swelling in electrolyte solution is less than 200%, the degree of swelling in electrolyte solution of the binder composition (polymer) is kept low, and the binder composition in the electrode for a non-aqueous lithium ion secondary battery can provide good binding capacity even in the presence of the electrolyte solution. In the electrode mixed material layer, the current collecting structure by the conductive additive is less likely to interrupt, and the non-aqueous lithium ion secondary battery can provide excellent input-output characteristics.

<Preparation of slurry composition for positive electrode of non-aqueous lithium ion secondary battery>

96.5 parts of NMC532 (lithium-containing composite oxide of Co-Ni-Mn) as a positive electrode active material, 2 parts of acetylene black (produced by Denka Company Limited, product name: Li 100) as a conductive additive, and 1.5 parts of the binder solution obtained in accordance with the above in terms of solid content of the polymer were added to a planetary mixer {HIVIS MIX® (HIVIS MIX is a registered trademark in Japan, other countries, or both) Model 2P-03 produced by PRIMIX Corporation} to be mixed. Furthermore, stirring and mixing were repeated with gradually adding NMP as an organic solvent, and the mixture was diluted to a viscosity of 4,250±250 mPa •s at 25±3°C, at 60 rpm (M4 rotor) with a Brookfield viscometer to prepare a slurry composition for the positive electrode of a non-aqueous lithium ion secondary battery (hereinafter referred to as "slurry composition for the positive electrode"). Table 2 presents the solid content concentration of the obtained slurry composition for the positive electrode.

<Production of positive electrode>

The slurry composition for the positive electrode obtained in accordance with the above was applied onto an aluminum foil with a thickness of 20 $\mu$m as a current collector by a comma coater to have a coating weight of 20.5±0.5 mg/cm$^2$.

Furthermore, the aluminum foil onto which the slurry composition was applied was conveyed through an oven with a temperature of 80°C at a rate of 300 mm/min for 3.3 minutes, and further conveyed through an oven with a temperature of 120°C for 3.3 minutes to dry the slurry composition for the positive electrode on the aluminum foil, thereby obtaining a web of positive electrode in which a positive-electrode mixed material layer was formed on the current collector.

The electrode density of the positive-electrode mixed material layer and the peel strength of the positive-electrode mixed material layer were measured as described below using the obtained web of positive electrode. Table 2 presents the results.

[Electrode density of positive-electrode mixed material layer]

The web of positive electrode produced in the above was cut into a strip of 100 mm long and 20 mm wide to prepare a specimen, and press operation by a press roll was performed in a state where the top and bottom of the specimen was sandwiched by copper foils of 300 mm long, 100 mm wide, and 15 $\mu$m thickness. After the pressing, the electrode density of the positive-electrode mixed material layer was measured. The roll gap by the press roll was 30 $\mu$m, the press load was 14 t, and the temperature in a test environment was 25±2°C. When pressing is performed under the same conditions, a higher electrode density after the pressing exhibits more excellent rolling ability, that is, facilitates an increase in electrode density.

[Peel strength of positive-electrode mixed material layer]

The positive-electrode mixed material layer side of the produced web of positive electrode was roll-pressed with a load of 14 t (ton) in an environment of a temperature of 25±3°C to produce a positive electrode. This positive electrode was cut into a strip of 100 mm long and 10 mm wide to prepare a specimen. The specimen was placed with the surface corresponding to the positive electrode mixed material layer underneath and cellophane tape (tape in conformance with JIS Z1522) was affixed to the surface of the positive electrode mixed material layer. One end of the current collector was pulled in a vertical direction at a pulling speed of 50 mm/min to peel off the current collector, and the stress in this peeling was measured (note that the cellophane tape was secured to a test bed). This measurement was made three times and an average value of the stress was determined. The determined average value was taken to be the peel strength of the positive-electrode mixed material layer. A larger peel strength of the positive-electrode mixed material layer indicates more excellent close adherence between the positive-electrode mixed material layer and the current collector.

(Examples 2 and 3)

Similar operation and measurement to those of Example 1 were performed, except for changing the amounts of the respective components to be used to the amounts presented in Table 1 and further blending 1.6 parts of a 25% aqueous solution of an emulsifier B (EMULGEN 120 produced by Kao Corporation) into the monomer mixed solution, in preparation of the binder composition. Table 2 presents the results.

(Example 4)

Similar operation and measurement to those of Example 1 were performed, except for changing the amounts of the respective components to be used to the amounts presented in Table 1, changing the 40% aqueous solution of acrylamide to 21.4 parts of a 14% aqueous solution of methacrylamide (MAam), and changing the polymerization temperature to 70°C, in preparation of the binder composition. Table 2 presents the results.

(Example 5)

Similar operation and measurement to those of Example 1 were performed, except for changing the amounts of the respective components to be used to the amounts presented in Table 1, changing the 40% aqueous solution of acrylamide to 21.4 parts of a 14% aqueous solution of methacrylamide (MAam), further blending 1.2 parts of a 25% aqueous solution of an emulsifier C (Hitenol KH-1025 produced by DKS Co., Ltd.) into the monomer mixed solution, and changing the polymerization temperature to 70°C, in preparation of the binder composition. Table 2 presents the results.

(Examples 6 and 12)

Similar operation and measurement to those of Example 1 were performed, except for changing the amounts of the respective components to be used to the amounts presented in Table 1 or Table 3, further blending 1.6 parts of a 25% aqueous solution of the emulsifier B (Example 6) or 1.2 parts of a 25% aqueous solution of the emulsifier B (Example 12) into the monomer mixed solution, and changing the polymerization temperature to 70°C, in preparation of the binder composition. Table 2 and Table 4 present the results.

(Examples 7, 8, and 10)

Similar operation and measurement to those of Example 1 were performed, except for changing the amounts of the respective components to be used to the amounts presented in Table 1 or Table 3 and changing the polymerization temperature to 65°C (Example 7) or 70°C (Examples 8 and 10), in preparation of the binder composition. Table 2 and Table 4 present the results.

(Example 9)

Similar operation and measurement to those of Example 1 were performed, except for changing the amounts of the respective components to be used to the amounts presented in Table 3, further blending 1.0 parts of a 30% aqueous solution of an emulsifier D (Newcol-707SN produced by NIPPON NYUKAZAI CO., LTD.) into the monomer mixed solution, and changing the polymerization temperature to 70°C, in preparation of the binder composition. Table 4 presents the results.

(Example 11)

Similar operation and measurement to those of Example 1 were performed, except for changing the amounts of the respective components to be used to the amounts presented in Table 3, removing tert-dodecyl mercaptan as a chain transfer agent, and changing the polymerization temperature to 70°C, in preparation of the binder composition. Table 4 presents the results.

(Comparative Example 1)

Similar operation and measurement to those of Example 1 were performed, except for changing the amounts of the respective components to be used to the amounts presented in Table 3, further blending 1.6 parts of a 25% aqueous solution of the emulsifier B into the monomer mixed solution, and changing the polymerization temperature to 57°C, in preparation of the binder composition. Table 4 presents the results.

(Comparative Example 2)

Similar operation and measurement to those of Example 1 were performed, except for changing the amounts of the respective components to be used to the amounts presented in Table 3 and changing the polymerization temperature to 57°C, in preparation of the binder composition. Table 4 presents the results.

(Comparative Example 3)

Similar operation and measurement to those of Example 1 were performed, except for changing the amounts of the respective components to be used to the amounts presented in Table 3, further blending 1.6 parts of a 25% aqueous solution of the emulsifier B into the monomer mixed solution, and changing the polymerization temperature to 70°C, in preparation of the binder composition. Table 4 presents the results.

In the Tables below:

"KPS" represents potassium persulfate;
"TDM" represents tert-dodecyl mercaptan;
"AN" represents acrylonitrile;
"MAN" represents methacrylonitrile;
"MAA" represents methacrylic acid;
"Aam" represents acrylamide;
"MAam" represents methacrylamide; and
"BA" represents n-butyl acrylate.

[Table 1]

| | | | Example 1 | Example 2 | Example 3 | Example 4 | Example 5 | Example 6 | Example 7 | Example 8 |
|---|---|---|---|---|---|---|---|---|---|---|
| Reactor A | | Solvent | Deionized water [part by mass] | 75 | 80 | 80 | 80 | 80 | 85 | 80 | 80 |
| | | Emulsifier | Emulsifier A (16% aqueous solution) [part by mass] | 1.25 | 1.25 | 1.25 | 1.25 | 1.25 | 1.25 | 1.25 | 3.13 |
| | | Polymerization initiator | KPS (4% aqueous solution) [part by mass] | 7.5 | 7.5 | 7.5 | 7.5 | 7.5 | 7.5 | 7.5 | 7.5 |
| | | Solvent | Deionized water [part by mass] | 90 | 130 | 130 | 70 | 95 | 125 | 130 | 130 |
| | | Emulsifier | Emulsifier A (16% aqueous solution) [part by mass] | 6.3 | 3.75 | 3.75 | 6.3 | 4.4 | 3.75 | 6.3 | 6.3 |
| | | | Emulsifier B (25% aqueous solution) [part by mass] | - | 1.6 | 1.6 | - | - | 1.6 | - | - |
| | | | Emulsifier C (25% aqueous solution) [part by mass] | - | - | - | - | 1.2 | - | - | - |
| | | | Emulsifier D (30% aqueous solution) [part by mass] | - | - | - | - | - | - | - | - |

(continued)

| | | | Example 1 | Example 2 | Example 3 | Example 4 | Example 5 | Example 6 | Example 7 | Example 8 |
|---|---|---|---|---|---|---|---|---|---|---|---|
| Reactor B | Monomer type | AN [part by mass] | 87 | 82 | 77 | 75.5 | 73 | 65 | 79 | 71 |
| | | a,b-ethylenically unsaturated nitrile monomer in which hydrogen at $\alpha$ position has been substituted — MAN [part by mass] | 5.5 | 8 | 13 | 16.5 | 22 | 27 | 5 | 24 |
| | | Acid group-containing monomer — MAA [part by mass] | 3 | 4 | 4 | 5 | 2 | 2 | 3 | 3 |
| | | Amide group-containing monomer — Aam (40% aqueous solution) [part by mass] | 6.3 | 7.5 | 7.5 | - | - | 7.5 | 5 | 5 |
| | | MAam (14% aqueous solution) [part by mass] | - | - | - | 21.4 | 21.4 | - | - | - |
| | | (Meth)acrylic acid ester monomer — BA [part by mass] | 2 | 3 | 3 | - | - | 3 | 11 | - |
| | Chain transfer agent | TDM [part by mass] | 0.05 | 0.20 | 0.20 | 0.05 | 0.05 | 0.10 | 0.05 | - |
| Polymerization conditions | | Dropping time [time] | 5 | 5 | 5 | 5 | 5 | 5 | 5 | 5 |
| | | Polymerization temperature [°C] | 60 | 60 | 60 | 70 | 70 | 70 | 65 | 70 |

[Table 2]

| | Example 1 | Example 2 | Example 3 | Example 4 | Example 5 | Example 6 | Example 7 | Example 8 |
|---|---|---|---|---|---|---|---|---|
| Crystallite size of polymer [nm] | 6.61 | 6.09 | 5.88 | 5.67 | 5.28 | 2.83 | 4.89 | 5.35 |
| Molar ratio (AN/MAN) [-] | 20.0 | 13.0 | 7.5 | 5.8 | 4.2 | 3.0 | 20.0 | 3.7 |
| Concentration of solid content including polymer in binder composition (water dispersion) [mass%] | 35 | 30 | 30 | 35 | 32 | 30 | 30 | 30 |
| Degree of swelling in electrolyte solution [%] | 136 | 137 | 137 | 142 | 153 | 190 | 176 | 147 |
| Weight-average molecular weight of polymer ($\times 10^4$) [-] | 164 | 82 | 78 | 116 | 117 | 98 | 107 | 173 |
| Electrode density of positive-electrode mixed material layer [g/cm$^3$] | 3.34 | 3.39 | 3.39 | 3.42 | 3.41 | 3.45 | 3.37 | 3.34 |
| Peel strength of positive-electrode mixed material layer [N/m] | 51 | 28 | 25 | 35 | 21 | 23 | 24 | 47 |
| Solid content concentration of slurry composition for positive electrode [mass%] | 68 | 72 | 76 | 72 | 73 | 74 | 73 | 69 |

[Table 3]

| | | Example 9 | Example 10 | Example 11 | Example 12 | Comparative Example 1 | Comparative Example 2 | Comparative Example 3 |
|---|---|---|---|---|---|---|---|---|
| Reactor A | Solvent — Deionized water [part by mass] | 80 | 80 | 80 | 80 | 88 | 80 | 80 |
| | Emulsifier — Emulsifier A (16% aqueous solution) [part by mass] | 3.13 | 1.25 | 3.13 | 3.125 | 1.25 | 1.25 | 1.25 |
| | Polymerization initiator — KPS (4% aqueous solution) [part by mass] | 12.5 | 7.5 | 3.75 | 17.5 | 7.5 | 7.5 | 7.5 |

(continued)

| | | | Example 9 | Example 10 | Example 11 | Example 12 | Comparative Example 1 | Comparative Example 2 | Comparative Example 3 |
|---|---|---|---|---|---|---|---|---|---|
| Reactor B | Solvent | Deionized water [part by mass] | 125 | 135 | 90 | 125 | 80 | 130 | 125 |
| | Emulsifier | Emulsifier A (16% aqueous solution) [part by mass] | 4.4 | 6.3 | 6.3 | 4.4 | 3.75 | 6.3 | 3.75 |
| | | Emulsifier B (25% aqueous solution) [part by mass] | - | - | - | 1.2 | 1.6 | - | 1.6 |
| | | Emulsifier C (25% aqueous solution) [part by mass] | - | - | - | - | - | - | - |
| | | Emulsifier D (30% aqueous solution) [part by mass] | 1.0 | - | - | - | - | - | - |
| | Monomer type | AN [part by mass] | 72 | 69 | 73 | 72 | 94 | 91 | 57 |
| | | a,b-ethylenically unsaturated nitrile monomer in which hydrogen at $\alpha$ position has been substituted | MAN [part by mass] | 22 | 29 | 22 | 22 | - | 5 | 37 |
| | | Acid group-containing monomer | MAA [part by mass] | 3 | 1 | 3 | 3 | 2 | 2 | 2 |
| | | Amide group-containing monomer | Aam (40% aqueous solution) [part by mass] | 7.5 | 2.5 | 5 | 7.5 | 2.5 | 5 | 7.5 |
| | | | MAam (14% aqueous solution) [part by mass] | - | - | - | - | - | - | - |
| | | (Meth)acrylic acid ester monomer | BA [part by mass] | - | - | - | - | 3 | - | 1 |
| | Chain transfer agent | TDM [part by mass] | 0.70 | 0.05 | - | 3.00 | 0.15 | 0.04 | 0.05 |

(continued)

| | | Example 9 | Example 10 | Example 11 | Example 12 | Comparative Example 1 | Comparative Example 2 | Comparative Example 3 |
|---|---|---|---|---|---|---|---|---|
| Polymerization conditions | Dropping time [time] | 5 | 5 | 5 | 5 | 5 | 5 | 5 |
| | Polymerization temperature [°C] | 70 | 70 | 70 | 70 | 57 | 57 | 70 |

[Table 4]

| | Example 9 | Example 10 | Example 11 | Example 12 | Comparative Example 1 | Comparative Example 2 | Comparative Example 3 |
|---|---|---|---|---|---|---|---|
| Crystallite size of polymer [nm] | 5.60 | 5.14 | 5.46 | 5.72 | 7.15 | 7.06 | 2.23 |
| Molar ratio (AN/MAN) [-] | 4.1 | 3.0 | 4.2 | 4.1 | - | 23.0 | 1.9 |
| Concentration of solid content including polymer in binder composition (water dispersion) [mass%] | 30 | 30 | 34 | 30 | 35 | 30 | 30 |
| Degree of swelling in electrolyte solution [%] | 145 | 158 | 128 | 141 | 133 | 135 | 250 |
| Weight-average molecular weight of polymer ($\times 10^4$) [-] | 42 | 96 | 194 | 29 | 87 | 179 | 100 |
| Electrode density of positive-electrode mixed material layer [g/cm$^3$] | 3.32 | 3.34 | 3.39 | 3.43 | 3.23 | 3.26 | 3.47 |
| Peel strength of positive-electrode mixed material layer [N/m] | 22 | 11 | 62 | 13 | 40 | 38 | 23 |
| Solid content concentration of slurry composition for positive electrode [mass%] | 79 | 75 | 65 | 78 | 73 | 67 | 71 |

The Tables above demonstrate that, when the binder composition (Examples 1 to 12) including a polymer including an acrylonitrile unit and a methacrylonitrile unit, and having a crystallite size of 2.5 nm or more and 7.0 nm or less, which is determined from the peak within the rage of $2\Theta = 14°$ to $18°$ in X-ray structure diffraction of this polymer and the half width of this peak, is used, the degree of swelling with respect to the electrolyte solution (degree of swelling in electrolyte solution) of the binder composition is kept low, and the used of this binder composition can obtain an electrode with high electrode density.

On the other hand, the Tables above demonstrate that, when the binder composition (Comparative Example 1) including only an acrylonitrile unit without a methacrylonitrile unit is used, and when the binder composition (Comparative Example 2) having a crystallite size of more than 7.0 nm, which is determined from the peak within the rage of $2\Theta = 14°$ to $18°$ in X-ray structure diffraction of the polymer and the half width of this peak, is used, the degree of swelling with respect to the electrolyte solution of the binder composition can be kept low, but an electrode with high electrode density cannot be obtained.

Moreover, the binder composition (Comparative Example 3) having a crystallite size of less than 2.5 nm, which is determined from the peak within the rage of $2\Theta = 14°$ to $18°$ in X-ray structure diffraction of the polymer and the half width of this peak, is used, an electrode with high electrode density can be easily obtained, but the degree of swelling with respect to the electrolyte solution (degree of swelling in electrolyte solution) of the binder composition is high.

INDUSTRIAL APPLICABILITY

According to the present disclosure, it is possible to provide a binder composition for an electrode of a non-aqueous lithium ion secondary battery, which can easily increase the electrode density of the electrode for a non-aqueous lithium ion secondary battery, while keeping the degree of swelling with respect to an electrolyte solution low, and a method of producing this binder composition.

Moreover, according to the present disclosure, it is possible to provide a binder solution for the electrode of a non-aqueous lithium ion secondary battery, which can easily increase the electrode density of the electrode for a non-aqueous lithium ion secondary battery, while keeping the degree of swelling with respect to an electrolyte solution low.

Furthermore, according to the present disclosure, it is possible to provide a slurry composition for the electrode of a non-aqueous lithium ion secondary battery, which can easily increase the electrode density of the electrode for a non-aqueous lithium ion secondary battery, while keeping the degree of swelling with respect to an electrolyte solution low.

Moreover, according to the present disclosure, it is possible to provide an electrode for a non-aqueous lithium ion secondary battery, which is excellent in energy density and input-output characteristics.

Furthermore, according to the present disclosure, it is possible to provide a non-aqueous lithium ion secondary battery that has high energy density and excellent input-output characteristics.

**Claims**

1. A binder composition for the electrode of a non-aqueous lithium ion secondary battery, the binder composition comprising a polymer, wherein

   the polymer includes an acrylonitrile unit; and an $\alpha,\beta$-ethylenically unsaturated nitrile monomer unit in which at least one or more types of hydrogen at the $\alpha$ position has been substituted, and
   the polymer has a crystallite size of 2.5 nm or more and 7.0 nm or less, which is determined from the peak within the range of $2\Theta = 14°$ to $18°$ in X-ray structure diffraction and the half width of the peak.

2. The binder composition for the electrode of a non-aqueous lithium ion secondary battery according to claim 1, wherein the polymer has a weight-average molecular weight (Mw) of 300,000 or more.

3. The binder composition for the electrode of a non-aqueous lithium ion secondary battery according to claim 1 or 2, wherein the $\alpha,\beta$-ethylenically unsaturated nitrile monomer unit in which a hydrogen at the $\alpha$ position has been substituted includes a methacrylonitrile unit, and the molar ratio of the acrylonitrile unit to the $\alpha,\beta$-ethylenically unsaturated nitrile monomer unit in which a hydrogen at the $\alpha$ position has been substituted, which are included in the polymer, is 3.0 or more and 20.0 or less.

4. The binder composition for the electrode of a non-aqueous lithium ion secondary battery according to any one of claims 1 to 3, wherein the polymer includes an acid group-containing monomer unit at a rate of 1 mass% or more and 6 mass% or less.

5. A method of producing the binder composition for the electrode of a non-aqueous lithium ion secondary battery according to any one of claims 1 to 4, the method comprising

obtaining the polymer by polymerizing a composition that includes acrylonitrile and an $\alpha,\beta$-ethylenically unsaturated nitrile monomer in which at least one or more types of hydrogen at the $\alpha$ position has been substituted, in the presence of a solvent or a dispersion medium, wherein
the binder composition for the electrode of a non-aqueous lithium ion secondary battery has a concentration of the solid content including the polymer of 15 mass% or more.

6. A binder solution for the electrode of a non-aqueous lithium ion secondary battery, the binder solution comprising an organic solvent and the binder composition for the electrode of a non-aqueous lithium ion secondary battery according to any one of claims 1 to 4, wherein the polymer is dissolved in the organic solvent.

7. A slurry composition for the electrode of a non-aqueous lithium ion secondary battery, the slurry composition comprising at least an electrode active material and the binder composition for the electrode of a non-aqueous lithium ion secondary battery according to any one of claims 1 to 4.

8. An electrode for a non-aqueous lithium ion secondary battery, the electrode comprising an electrode mixed material layer formed using the slurry composition for the electrode of a non-aqueous lithium ion secondary battery according to claim 7.

9. A non-aqueous lithium ion secondary battery comprising the electrode for a non-aqueous lithium ion secondary battery according to claim 8.

## INTERNATIONAL SEARCH REPORT

| International application No. |
| --- |
| **PCT/JP2021/042328** |

| A. | CLASSIFICATION OF SUBJECT MATTER |
| --- | --- |

*C08F 220/44*(2006.01)i; *H01M 4/13*(2010.01)i; *H01M 4/139*(2010.01)i; *H01M 4/62*(2006.01)i
FI: H01M4/62 Z; H01M4/139; H01M4/13; C08F220/44

According to International Patent Classification (IPC) or to both national classification and IPC

| B. | FIELDS SEARCHED |
| --- | --- |

Minimum documentation searched (classification system followed by classification symbols)

C08F220/44; H01M4/13; H01M4/139; H01M4/62

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2004-185826 A (ZEON CORP.) 02 July 2004 (2004-07-02) <br> claims, table 2 | 1-9 |
| A | WO 2015/133423 A1 (ZEON CORP.) 11 September 2015 (2015-09-11) <br> claims, example 5 | 1-9 |
| A | JP 2020-167144 A (SUMITOMO RUBBER INDUSTRIES, LTD.) 08 October 2020 (2020-10-08) <br> claims, examples | 1-9 |
| A | WO 2012/091001 A1 (ZEON CORP.) 05 July 2012 (2012-07-05) <br> claims, tables | 1-9 |
| P, A | JP 6962428 B1 (TOYO INK SC HOLDINGS CO., LTD.) 05 November 2021 (2021-11-05) <br> claims, table 1, copolymer 5 | 1-9 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 January 2022** | **18 January 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
**Information on patent family members**

International application No.

**PCT/JP2021/042328**

| Patent document cited in search report | | | Publication date (day/month/year) | Patent family member(s) | | | Publication date (day/month/year) |
|---|---|---|---|---|---|---|---|
| JP | 2004-185826 | A | 02 July 2004 | (Family: none) | | | |
| WO | 2015/133423 | A1 | 11 September 2015 | CN claims, example 5 | 105900271 | A | |
| | | | | KR 10-2016-0129832 | | A | |
| JP | 2020-167144 | A | 08 October 2020 | US claims, examples | 2020/0313190 | A1 | |
| | | | | EP | 3716363 | A1 | |
| | | | | CN | 111755687 | A | |
| WO | 2012/091001 | A1 | 05 July 2012 | US claims, tables | 2013/0280606 | A1 | |
| | | | | EP | 2660908 | A1 | |
| | | | | KR 10-2013-0143617 | | A | |
| JP | 6962428 | B1 | 05 November 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019526693 A
- JP 4748439 B
- WO 2012115096 A
- JP 2012204303 A